# EUROPÄISCHE PATENTSCHRIFT

(11) **EP 1 932 752 B1**
(45) Veröffentlichungstag und Bekanntmachung des Hinweises auf die Patenterteilung: **13.07.2011**
(21) Anmeldenummer: 07023672.4
(22) Anmeldetag: 06.12.2007
(51) Int. Cl.: B62D 35/00

(54) **Funktionseinrichtung mit schwenkbarem Element**
Function device with pivotable element
Dispositif de fonctionnement doté d'un élément articulé

(30) Priorität: 12.12.2006 DE 102006058561
(43) Veröffentlichungstag der Anmeldung: 18.06.2008
(73) Patentinhaber: HS Genion GmbH, 82205 Gilching (DE)
(72) Erfinder: Wegener, Fritz, 82205 Gilching (DE)
(74) Vertreter: advotec.

(56) Entgegenhaltungen:
- EP-A1- 0 298 205
- DE-A1- 3 520 971
- DE-A1- 4 418 954
- DE-A1-102004 030 571
- FR-A1- 2 816 906
- JP-A- 60 146 747

## Beschreibung

Die Erfindung betrifft eine Funktionseinrichtung nach dem Oberbegriff des Anspruchs 1.

Eine derartige Funktionseinrichtung (Luftleiteinrichtung) ist aus der Druckschrift DE 3520971 A1 bekannt und ist im oberen Randbereich einer Heckklappe des Kraftfahrzeuges angeordnet. Diese Luftleiteinrichtung umfasst ein Leitprofil, das gegenüber der Heckklappe zwischen zwei Endstellungen verschenkbar ist. Hierzu ist das Leitprofil an einem Schwenkmechanismus gelagert, der eine Scharnierbasis umfasst, an der zwei Scharnierhebel und angelenkt sind, die mit ihren der Scharnierbasis abgewandten Enden an dem Leitprofil angelenkt sind. Im weitesten Sinne kann die Scharnierbasis als Basiselement und das Leitprofil als Schwenkelement aufgefasst werden. Des Weiteren umfasst diese Luftleiteinrichtung Übertotpunktfedern, mittels derer das Leitprofil in seinen beiden Stellung gen arretierbar ist. Die Übertotpunktfedern spannen mithin das Luftprofil in Richtung seiner jeweiligen Endstellung vor. Die Betätigung des Leitprofils kann mittels eines Stellmotors erfolgen . Der Stellmotor muss beim Verstellen des Luftprofils jeweils die Vorspannung der Übertotpunktfedern überwinden, was einen entsprechend großen Stellmotor erforderlich macht.

Ferner ist eine als Luftleitvorrichtung ausgebildete Funktionseinrichtung, die im Heckbereich eines Kraftfahrzeugs angeordnet ist, aus der DE 10 2004 0303 571 A1 bekannt. Diese Luftleitvorrichtung umfasst ein als Spoilerkorpus ausgebildetes Basiselement, das mittels einer Verstelleinrichtung zwischen einer eingefahrenen Ruhestellung und einer ausgefahrenen Betriebsstellung verstellbar ist, sowie zwei gegenüber dem Basiselement verschwenkbare Schwenkelemente, die jeweils als Spoilererweiterung genutzt werden können und in einer Betriebsstellung bezüglich einer Fahrzeuglängsmittelebene nach außen verschwenkt sind. Durch die Spoilererweiterungen kann bei Bedarf die Wirkfläche durch Vergrößerung oder Verkleinerung der Anströmfläche verändert werden. Wenn die Luftleitvorrichtung in ihre in einer heckseitigen Karosseriemulde aufgenommene Ruhestellung verfahren wird, sind die Spoilererweiterungen nach innen verschwenkt, so dass die Abmessungen der Luftleiteinrichtung an die Abmessungen der Karosseriemulde angepasst sind.

Der Erfindung liegt nun die Aufgabe zugrunde, eine an einer Außenseite einer Fahrzeugkarosserie angeordnete Funktionseinrichtung der einleitenden genannten Gattung bereitzustellen, die mit einer konstruktiv einfach realisierbaren und mit geringen Antriebskräften betätigbaren Verstelleinrichtung für das Schwenkelement versehen ist.

Diese Aufgabe ist erfindungsgemäß durch die Funktionseinrichtung mit den Merkmalen des Patentanspruchs 1 gelöst.

Der Kern der Erfindung besteht mithin darin, zum Verschwenken des Schwenkelementes gegenüber dem Basiselement eine Mehrgelenkmechanik bereitzustellen, die mittels einer Federeinrichtung in den beiden Endstellungen des Schwenkelementes bzw. der Lenker der Mehrgelenkmechanik jeweils in Richtung der jeweils anderen Endstellung vorgespannt ist. Durch die von der Federeinrichtung bereitgestellte Vorspannung muss eine zum Verschwenken des Schwenkelementes gegenüber dem Basiselement erforderliche Antriebseinrichtung, wie ein Elektromotor oder dergleichen, im Vergleich zu einer Anordnung ohne Federeinrichtung eine geringere Stellkraft aufbringen, was wiederum zu einer schwächeren und damit auch leichteren Antriebseinrichtung führt. Die Federeinrichtung wirkt als Massenausgleichsfeder, die bei einer speziellen Auslegung der von dem Schwenkelement in der jeweiligen Endstellung ausgeübten Massenkraft entgegenwirkt. Die Kraft zum Halten des Schwenkelementes in der betreffenden Endstellung kann entweder von der Antriebseinrichtung selbst oder von einem selbsthemmenden Getriebe aufgebracht werden. Die Federeinrichtung unterstützt mithin die Antriebseinrichtung zum Verstellen des Schwenkelementes. Beim Ablegen des Schwenkelementes in eine der Endstellungen wirkt die Federeinrichtung jedoch bremsend, was in vorteilhafter Weise zu einer Vergleichmäßigung der Bewegung des Schwenkelementes führt.

Eine vollständige Kompensation der von dem Schwenkelement aufgebrachten Massenkraft durch die Federeinrichtung kann nur in den Endstellungen des Schwenkelementes erfolgen, da die Kennlinie der Federeinrichtung insbesondere linear ist und die Kennlinie zum Verstellen des Schwenkelementes einer Winkelfunktion folgt.

Bei einer speziellen Ausführungsform ist das Funktionselement eine Luftleitvorrichtung, die insbesondere am Fahrzeugheck angebracht ist. Vorzugsweise ist die Luftleitvorrichtung aus einer Ruhestellung in eine Betriebsstellung ausfahrbar. In diesem Falle weist die Luftleitvorrichtung als Basiselement zweckmäßigerweise einen Spoilerkorpus auf, wobei das Schwenkelement eine Spoilererweiterung ist. Vorzugsweise sind zwei Spoilererweiterungen vorgesehen, die jeweils im Wesentlichen in Fahrzeugquerrichtung verschwenkbar sind. In einer Endstellung der Spoilererweiterungen sind diese bezogen auf eine Fahrzeuglängsmittelebene nach innen geschwenkt und in der anderen Endstellung sind die Spoilerweiterungen bezogen auf die Fahrzeuglängsmittellinie nach außen geschwenkt. Die Spoilererweiterungen können an der Oberseite des Spoilerkorpus angelenkt sein. Alternativ können diese aber auch an der Unterseite oder der Hinterseite des Spoilerkorpus angelenkt sein. Um Bewegungsabläufe realisieren zu können, die einer Kugelfläche folgen, ist die Mehrgelenkmechanik bei einer speziellen Ausführungsform des Funktionselementes nach der Erfindung derart ausgelegt, dass sich deren Gelenkachsen in einem Punkt schneiden. Es liegt dann ein so genanntes sphärisches Mehrgelenk vor.

Der Begriff Spoilerkorpus bezeichnet im vorliegenden Zusammenhang einen Luftleitkörper, der einen aerodynamisch wirksamen Teil der Luftleitvorrichtung bildet und beispielsweise als starres, im Wesentlichen plattenförmiges Luftleitprofil ausgebildet ist. Die Spoilererweiterungen können als Schalen ausgebildet sein, die sich beim in Richtung der Fahrzeuglängsmittelebene geschwenkten Zustand formschlüssig an bzw. über den Spoilerkorpus legen.

Bei einer bevorzugten und kostengünstig realisierbaren Funktionseinrichtung nach der Erfindung ist die Federeinrichtung eine Schenkelfeder, deren Windungen konzentrisch zu einer Schwenkachse desjenigen Lenkers angeordnet sind, auf den sie wirkt. Die Windungen sitzen zweckmäßigerweise auf einer basiselementseitigen Schwenkachse dieses Lenkers. Die beiden Schenkel bzw. Enden der Schenkelfeder können sich je nach Stellung des Lenkers bzw. des Schwenkelementes an einem Anschlag abstützen, der starr mit dem Basiselement verbunden ist. Insbesondere stützt sich in den beiden Endstellungen des Schwenkelementes jeweils einer der Schenkel der Schenkelfeder an dem Anschlag ab, wobei der jeweils andere Schenkel der Schenkelfeder auf den betreffenden Lenker des Schwenkelements wirkt. In jeder der beiden Endstellungen hat die Schenkelfeder die maximale Vorspannung, so dass sie der von dem Schwenkelement ausgeübten Gewichtskraft entgegenwirkt. Bei geeigneter Auslegung der Schenkelfeder erzielt man in den Endstellungen einen Gewichtsausgleich von 100 %. In der Mittelstellung ist die Schenkelfeder entspannt und gibt mithin keine Kräfte auf das System aus. In dieser Stellung liegt der als Mitnehmer ausgebildete, lenkerfeste Stift unterhalb oder oberhalb des basiselementfesten Anschlags.

In einer Mittelstellung des Lenkers, auf den die Schenkelfeder wirkt, liegen beide Schenkel der Schenkelfeder vorzugsweise an dem Anschlag an, wobei die Schenkelfeder dann im Wesentlichen vorspannungsfrei ist, was eine ruckelfreie Schwenkbewegung des Schwenkelementes gewährleistet.

Zum Angriff der Schenkel der Schenkelfeder ist an dem Lenker, auf welchen die Schenkelfeder wirkt, vorzugsweise ein Mitnehmer für die Schenkelfederschenkel ausgebildet. Der Mitnehmer ist insbesondere als Stift ausgebildet, der parallel zur Schwenkachse des betreffenden Lenkers ausgerichtet ist. Wird das Schwenkelement in eine seiner beiden Endstellungen gebracht, so wird durch den lenkerfesten Stift ein Federschenkel mitgenommen, wobei sich der andere Federschenkel an dem spoilerkorpusfesten Anschlag abstützt. Beim Verschwenken der Spoilererweiterung zwischen den Endstellungen führen die beiden Schenkel der Schenkelfeder jeweils im Vergleich zu dem Schwenkwinkel des Lenkers den halben Schwenkwinkel aus, so dass die Schenkelfeder mit einer begrenzten Anzahl an Windungen auskommt, was sich wiederum positiv auf den zur Verfügung zu stellenden Bauraum auswirkt.

Der Antrieb der insbesondere als Viergelenk ausgebildeten Mehrgelenkmechanik, deren Gelenkachsen im Wesentlichen in Fahrzeuglängsrichtung oder bei einem sphärischen Viergelenk auch mit in einem spitzen Winkel gegenüber der Fahrzeuglängsachse ausgerichtet sind und über die die Spoilererweiterungen an den Spoilerkorpus angebunden sind, erfolgt insbesondere über ein Gestänge, das mit einem der Lenker verbunden ist. In der ausgefahrenen und der eingefahrenen Stellung des Schwenkelementes gegenüber dem Basiselement ist der Hebelarm des Antriebsgestänges am kleinsten und der Hebelarm des Massenschwerpunkts des Schwenkelementes am größten. In diesen Stellungen müssen also die größten Kräfte aufgebracht werden, um das Schwenkelement anzuheben und zu verschwenken. In einer Mittelstellung des Schwenkelementes ist der Hebelarm des Antriebsgestänges am größten und der Hebelarm des Massenschwerpunkts des Schwenkelementes minimal. Hier sind dann nur minimale Kräfte zum Antrieb des Schwenkelementes erforderlich. Ohne Federeinrichtung müsste die Antriebseinrichtung für das Schwenkelement entsprechend dem in den Endstellungen aufzubringenden Moment ausgelegt sein. Durch die Federeinrichtung, die die Antriebseinrichtung unterstützt, kann aber ein schwächerer und damit auch kleinerer und leichterer Motor eingesetzt werden.

Wenn derjenige Lenker, der mittels der als Schenkelfeder ausgebildeten Federeinrichtung vorgespannt ist, der bezogen auf die Fahrzeuglängsmittelebene außenliegende und nicht angetriebene Lenker ist, kann erreicht werden, dass die gesamte Antriebskette durch die Federeinrichtung verspannt ist und möglichen Spiele im Gesamtsystem wirkungsvoll entgegengewirkt wird.

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel eines Kraftfahrzeugs mit einer erfindungsgemäß ausgebildeten Luftleitvorrichtung ist in der Zeichnung schematisch vereinfacht dargestellt und wird in der nachfolgenden Beschreibung näher erläutert. Es zeigt:
- Fig. 1: eine perspektivische Heckansicht eines Kraftfahrzeugs mit einer heckseitigen Luftleitvorrichtung;
- Fig. 2: eine Fig. 1 entsprechende Ansicht, jedoch mit ausgeschwenkten Spoilererweiterungen;
- Fig. 3: die Luftleitvorrichtung in Alleinstellung mit eingeschwenkten Spoilererweiterungen;
- Fig. 4: die Luftleitvorrichtung während des Verschwenkens der Spoilererweiterungen;
- Fig. 5: die Luftleitvorrichtung bei ausgeschwenkten Spoilererweiterungen;
- Fig. 6: eine Detailansicht der Luftleitvorrichtung in einer Zwischenstellung der Spoilererweiterungen;
- Fig. 7: eine perspektivische Draufsicht auf einen Lenker zum Verstellen einer der Spoilererweiterungen;
- Fig. 8: eine perspektivische Seitenansicht des Lenkers in einer Zwischenstellung der betreffenden Spoilererweiterung;
- Fig. 9: eine Fig. 8 entsprechende Ansicht, jedoch ohne Befestigungslasche für einen Schenkelfederanschlag;
- Fig. 10: eine Fig. 9 entsprechende Ansicht, jedoch ohne Darstellung des Schenkelfederanschlags;
- Fig. 11: den Lenker bei ausgestellter Spoilererweiterung; und
- Fig. 12: den Lenker bei eingeschwenkter Spoilererweiterung.

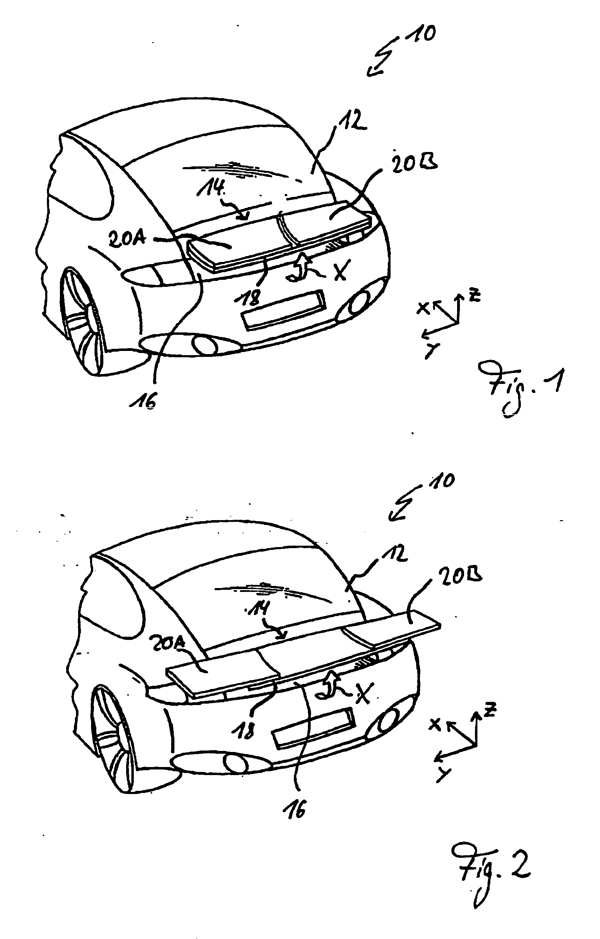

In den Figuren 1 und 2 ist ein Kraftfahrzeug 10 dargestellt, das im Heckbereich unterhalb einer Heckscheibe 12 eine einen Heckspoiler darstellende Luftleitvorrichtung 14 aufweist. Die Luftleitvorrichtung 14 ist zwischen einer in einer Karosseriemulde 16 aufgenommenen Ruhestellung und der in den Figuren 1 und 2 dargestellten Betriebsstellung gemäß einem Pfeil X verfahrbar.

Die Luftleitvorrichtung 14, die sich in Fahrzeugquerrichtung Y erstreckt, umfasst einen mittig angeordneten Spoilerkorpus 18 sowie zwei Spoilererweiterungen 20A und 20B, die bezogen auf eine Fahrzeuglängsmittelebene spiegelsymmetrisch angeordnet sind und zwischen einer in Fig. 1 dargestellten Ruhestellung, in der sie den Spoilerkorpus 18 im Wesentlichen vollflächig überdecken, und einer in Fig. 2 dargestellten Betriebsstellung verschwenkbar sind, in der sie die Anströmfläche der Luftleitvorrichtung 14 in Fahrzeugquerrichtung vergrößern, so dass die Anströmfläche der Luftleitvorrichtung 14 von den Oberseiten der beiden Spoilererweiterungen 20A und 20B und von dem Spoilerkorpus 18 gebildet ist.

Das Verfahren der Luftleitvorrichtung 14 aus der in der Ausnehmung bzw. Karosseriemulde 16 angeordneten Ruhestellung in die in den Figuren 1 und 2 dargestellte Betriebsstellung erfolgt mittels eines nicht näher dargestellten Elektromotors sowie einer ebenfalls nicht näher dargestellten Kinematik.

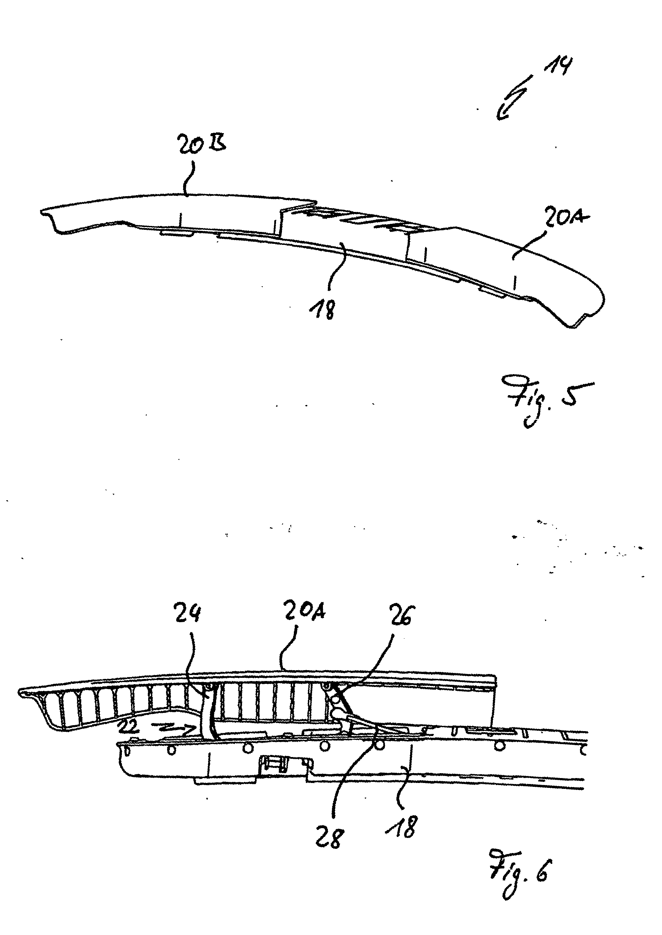

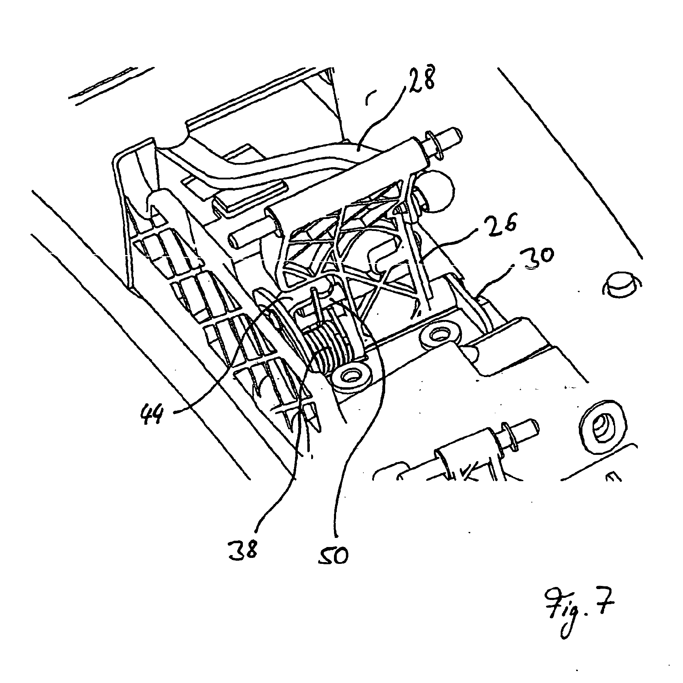

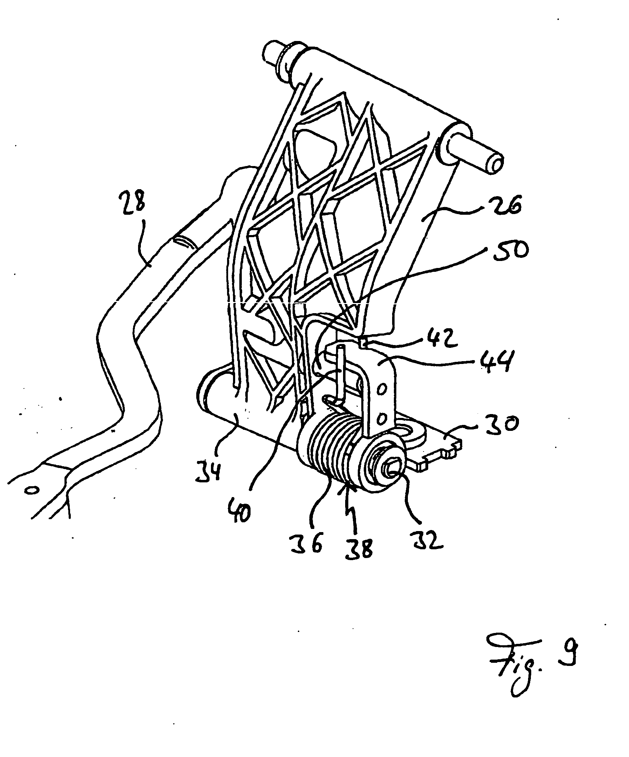

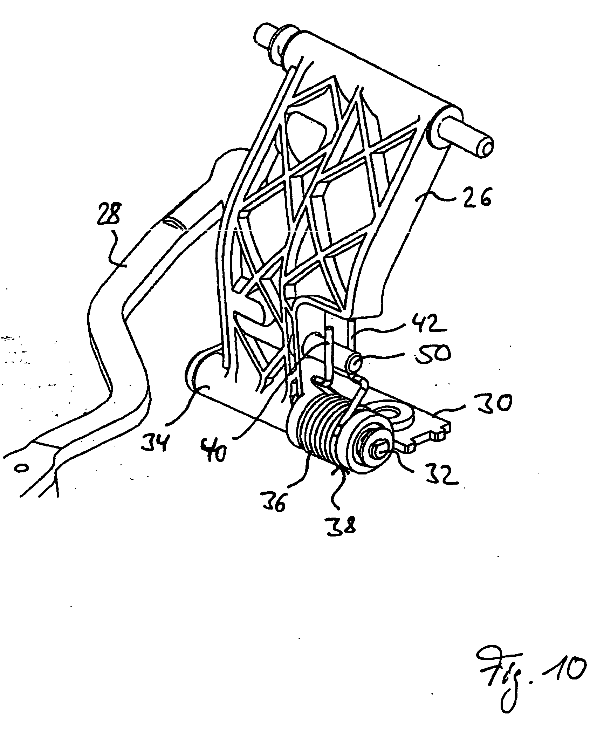

Das Verschwenken der Spoilererweitungen 20A und 20B, welche auch als Spoilerflaps bezeichnet werden, erfolgt jeweils mittels einer sphärischen Viergelenkmechanik 22, die nachfolgend unter Bezugnahme auf die Figuren 6 bis 12 hinsichtlich der Spoilererweiterung 20A erläutert wird. Das Verschwenken der zu der Spoilererweiterung 20A spiegelsymmetrisch ausgebildeten Spoilererweiterung 20B erfolgt in analoger Weise und wird daher nicht näher erläutert.

Die Viergelenkmechanik 22 umfasst einen bezogen auf die Fahrzeuglängsmittelebene äußeren Lenker 24 und einen bezogen auf die Fahrzeuglängsmittelebene inneren Lenker 26. Die beiden Lenker 24 und 26 sind mit ihren in Fig. 6 unten dargestellten Enden jeweils an dem Spoilerkorpus 18 und mit ihren in Fig. 6 oben dargestellten Enden jeweils an der Spoilererweiterung 20A angelenkt. Der innere Lenker 26 ist mit einem Antriebsgestänge 28 verbunden, welches über ein nicht näher dargestelltes Getriebe mit einem Antriebsmotor gekoppelt ist und so eine Verstellkraft in den inneren Lenker 26 einleiten kann.

Der innere Lenker 26 ist an einer Konsole 30 des ein Basiselement bildenden Spoilerkorpus 18 angelenkt. Im Bereich der Konsole 30 ist ein von einem Bolzen 32 gebildetes Schwenklager 34 des inneren Lenkers 26 ausgebildet. Konzentrisch zu der Schwenkachse sind in Verlängerung des Schwenklagers 34 Windungen 36 einer eine Federeinrichtung darstellenden Schenkelfeder 38 auf dem Bolzen 32 angeordnet. Die Schenkelfeder 38 ist drehfest bezüglich der Konsole 30 montiert.

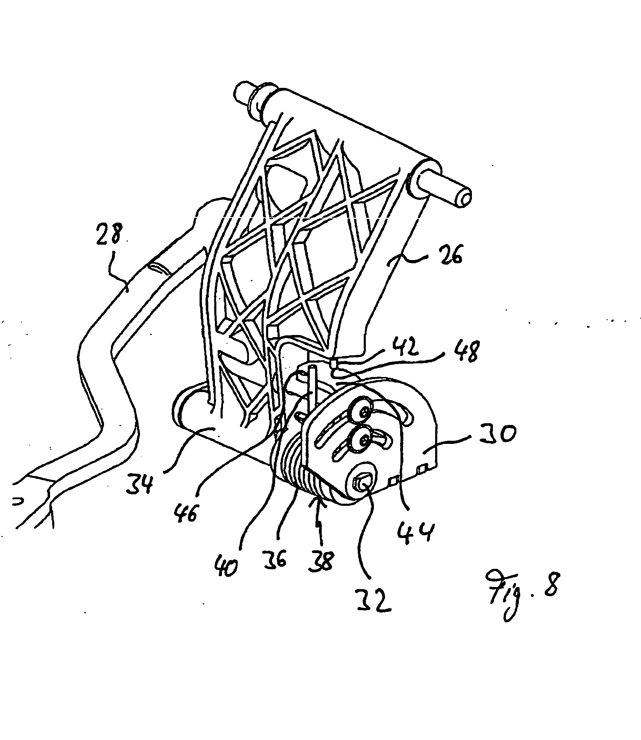

Die Schenkelfeder 38 weist zwei Federschenkel 40 und 42 auf, die in der in Fig. 8 dargestellten Zwischenstellung des inneren Lenkers 26 jeweils an einem als Zunge ausgebildeten Anschlag 44 anliegen, der fest mit der Konsole 30 verbunden ist und an dem für jeden der Federschenkel 40 und 42 eine Kerbe 46 bzw. 48 ausgebildet ist. In dieser Zwischenstellung ist die Schenkelfeder 38 im Wesentlichen vorspannungsfrei.

Der innere Lenker 26 weist einen als Mitnehmer für die Federschenkel 40 und 42 dienenden, im Wesentlichen parallel zu den Schwenkachsen Schwenkachse des Lenkers 26 ausgerichteten Stift 50 auf, der in der in den Figuren 8 bis 10 dargestellten Zwischenstellung unterhalb des zungenförmigen Anschlags 44 zwischen den beiden Federschenkeln 40 und 42 angeordnet ist, wobei die Federschenkel 40 und 42 ebenfalls im wesentlichen ohne Vorspannung an diesem Stift 50 anliegen.

Die Schenkelfeder 38 arbeitet in nachfolgend beschriebener Weise.

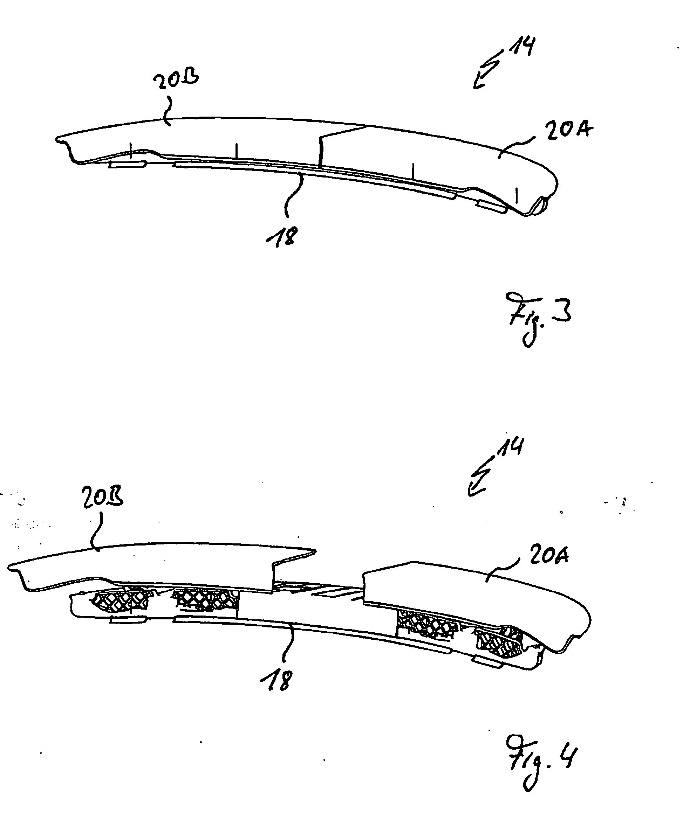

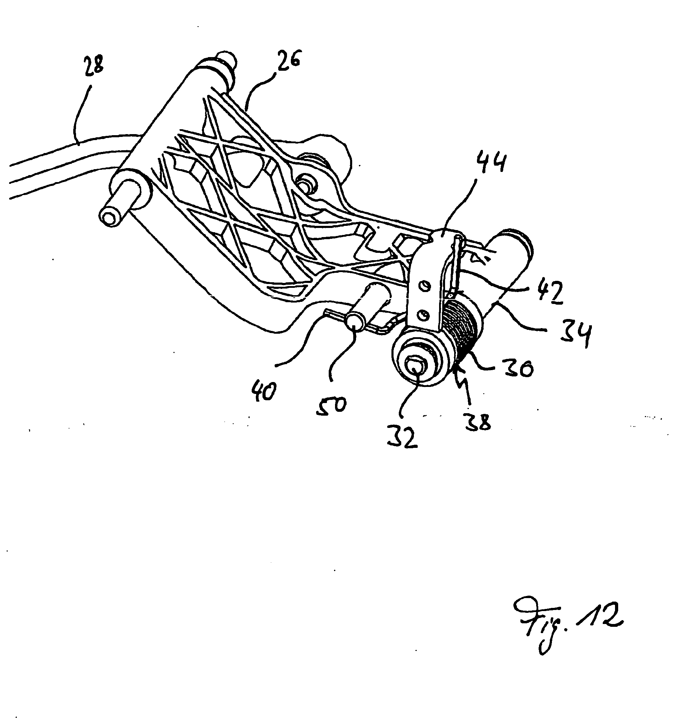

In der in Fig. 3 dargestellten, eingeschwenkten Stellung der ein Schwenkelement darstellenden Spoilererweiterung 20A, die der in Fig. 12 dargestellten Lenkerstellung entspricht, hat die Schenkelfeder 38 dadurch eine maximale Vorspannung, dass der Federschenkel 40 an dem Mitnehmerstift 50 anliegt und verschwenkt ist und der Federschenkel 42 in der zugeordneten Kerbe 48 des Anschlags 44 angeordnet ist. Die Vorspannung der Schenkelfeder 38 wirkt mithin entgegen der von der Spoilererweiterung 20A ausgeübten Massenkraft auf den inneren Lenker 26, so dass von dem Antriebsmotor nur geringe Kräfte aufgewendet werden müssen, um die Spoilererweiterung 20A aus der eingeschwenkten Ruhestellung in Richtung der ausgeschwenkten Betriebsstellung zu verschwenken. Beim Verschwenken des Lenkers 26 nimmt die Vorspannung der Schenkelfeder 38 ab, bis der Federschenkel 40 in der Kerbe 46 des Anschlags 44 zu liegen kommt.

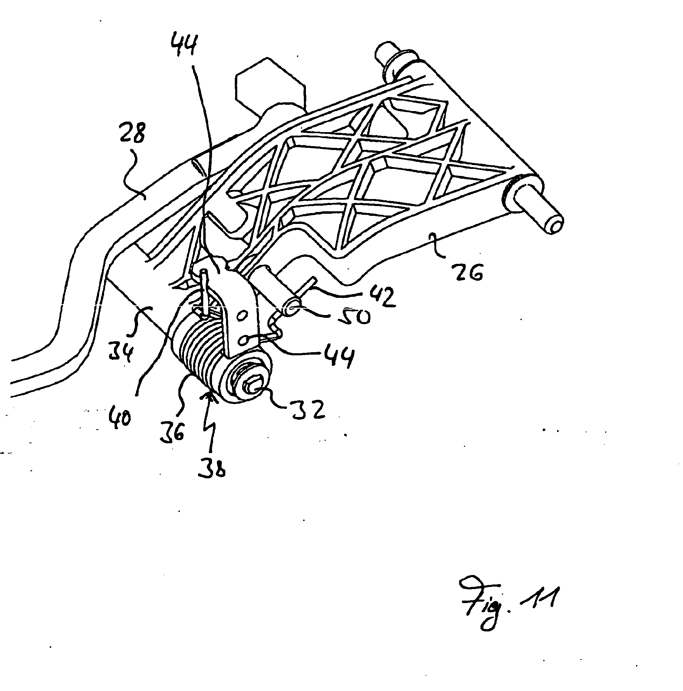

Wird nun der Lenker 26 weiter in Richtung der ausgeschwenkten Betriebsstellung der Spoilererweiterung 20A verschwenkt, nimmt der Mitnehmerstift 50 den zweiten Federschenkel 42 mit, bis die in Fig. 11 dargestellte Stellung des inneren Lenkers 26 erreicht ist, in der die Vorspannung der Schenkelfeder 38 maximal ist. Da die von der Spoilererweiterung 20A ausgeübte Massenkraft und die bei maximaler Vorspannung der Schenkelfeder 38 dieser Massenkraft entgegenwirkende Federkraft der Schenkelfeder 38 in etwa gleich sind, müssen auch zum Vorspannen der Schenkelfeder 38 nur geringe Kräfte von dem Antriebsmotor aufgebracht werden.

Beim Zurückschwenken der Spoilererweiterung 20A in die Ruhestellung hat die Schenkelfeder 38 einen umgekehrten Bewegungsablauf.

Beim Verschwenken der Spoilererweiterung 20A zwischen den Endstellungen führen die beiden Federschenkel 40 und 42 der Schenkelfeder 38 jeweils im Vergleich zu dem Schwenkwinkel des inneren Lenkers 26 den halben Schwenkwinkel aus, so dass die Schenkelfeder 38 mit einer begrenzten Anzahl an Windungen auskommt, was sich wiederum positiv auf den zur Verfügung zu stellenden Bauraum auswirkt.

### Bezugszeichen

- 10: Kraftfahrzeug
- 12: Heckscheibe
- 14: Luftleitvorrichtung
- 16: Karosseriemulde
- 18: Spoilerkorpus
- 20A, B: Spoilererweiterungen
- 22: Viergelenkmechanik
- 24: äußerer Lenker
- 26: innerer Lenker
- 28: Antriebsgestänge
- 30: Konsole
- 32: Bolzen
- 34: Schwenklager
- 36: Windungen
- 38: Schenkelfeder
- 40: Federschenkel
- 42: Federschenkel
- 44: Anschlag
- 46: Kerbe
- 48: Kerbe
- 50: Stift

## Patentansprüche

1. Funktionseinrichtung, die an einer Außenseite einer Fahrzeugkarosserie anordenbar ist, umfassend ein Basiselement (18) und mindestens ein Schwenkelement (20A, 20B), das gegenüber dem Basiselement (18) zwischen zwei Endstellungen verschwenkbar ist, wobei an dem Basiselement (18) eine Mehrgelenkmechanik angelenkt ist, die mindestens zwei Lenker (24, 26) umfasst, die mit ihren dem Basiselement (18) abgewandten Enden an dem gegenüber dem Basiselement (18) verschwenkbaren Schwenkelement (20A, 20B) angelenkt sind, wobei einer der Lenker (24, 26) mit einer Antriebseinrichtung verbunden ist und auf mindestens einen der Lenker (24, 26) eine Federeinrichtung (38) wirkt, **dadurch gekennzeichnet, dass** die Federeinrichtung (38) in den Endstellungen des Schwenkelementes (20A, 20B) vorgespannt ist und dessen Massenkraft entgegenwirkt.

2. Funktionseinrichtung nach Anspruch 1, **dadurch gekennzeichnet, dass** die Federeinrichtung (38) eine Schenkelfeder ist, deren Windungen (36) konzentrisch zu einer Schwenkachse desjenigen Lenkers (26) angeordnet ist, auf den sie wirkt.

3. Funktionseinrichtung nach Anspruch 2, **dadurch gekennzeichnet, dass** ein Anschlag (44) vorgesehen ist, der starr mit dem Basiselement (18) verbunden ist und an dem sich in den beiden Endstellungen des Schwenkelementes (20A, 20B) jeweils einer der Schenkel (40, 42) der Schenkelfeder (38) abstützt, wobei der jeweils andere Schenkel (40, 42) der Schenkelfeder (38) auf den betreffenden Lenker (26) wirkt.

4. Funktionseinrichtung nach Anspruch 3, **dadurch gekennzeichnet, dass** in einer Mittelstellung des Lenkers (26), auf den die Schenkelfeder (38) wirkt, beide Schenkel (40, 42) der Schenkelfeder (38) an dem Anschlag (44) anliegen und die Schenkelfeder (38) im Wesentlichen vorspannungsfrei ist.

5. Funktionseinrichtung nach einem der Ansprüche 2 bis 4, **dadurch gekennzeichnet, dass** an dem Lenker (26), auf den die Schenkelfeder (38) wirkt, ein Mitnehmer (50) für die Schenkel (40, 42) der Schenkelfeder (38) ausgebildet ist.

6. Funktionseinrichtung nach Anspruch 5, **dadurch gekennzeichnet, dass** der Mitnehmer (50) ein Stift ist, der parallel zur Schwenkachse des betreffenden Lenkers (26) ausgerichtet ist.

7. Funktionseinrichtung nach einem der Ansprüche 1 bis 6, **dadurch gekennzeichnet, dass** sie eine Luftleitvorrichtung ist, die insbesondere am Fahrzeugheck angeordnet ist.

8. Funktionseinrichtung nach Anspruch 7, **dadurch gekennzeichnet, dass** das Basiselement (18) ein Spoilerkorpus ist und das Schwenkelement (20A, 20B) eine Spoilererweiterung ist.

9. Funktionseinrichtung nach Anspruch 8, **dadurch gekennzeichnet, dass** die Spoilererweiterung im Wesentlichen in Fahrzeugquerrichtung verschwenkbar ist.

10. Funktionseinrichtung nach Anspruch 8 oder 9, **dadurch gekennzeichnet, dass** der Spoilerkorpus (18) mit einer Antriebseinrichtung zum Ausfahren der Luftleitvorrichtung versehen ist.

11. Funktionseinrichtung nach einem der Ansprüche 8 bis 10, **dadurch gekennzeichnet, dass** die Spoilererweiterung (20A, 20B)in einer Endstellung bezogen auf eine Fahrzeuglängsmittelebene nach innen geschwenkt ist und in der anderen Endstellung bezogen auf die Fahrzeuglängsmittelebene nach außen geschwenkt ist.

12. Funktionseinrichtung nach einem der Ansprüche 8 bis 11, **dadurch gekennzeichnet, dass** die Spoilererweiterung (20A, 20B) an der Oberseite des Spoilerkorpus (18) angelenkt ist.

13. Funktionseinrichtung nach Anspruch 11, **dadurch gekennzeichnet, dass** die Federeinrichtung (38) auf den bezogen auf die Fahrzeuglängsmittelebene außenliegenden Lenker (24) wirkt.

14. Funktionseinrichtung nach einem der Ansprüche 1 bis 13, **dadurch gekennzeichnet, dass** die Mehrgelenkmechanik Gelenkachsen aufweist, die sich in einem Punkt schneiden.

## Claims

1. Functional device which can be arranged on the outer side of a vehicle body, comprising a base element (18) and at least one pivoting element (20A, 20B) which is pivotable with respect to the base element (18) between two end positions, wherein a multi-linkage mechanism is articulatedly connected to the base element (18), which multi-linkage mechanism comprises at least two linkages (24, 26) which are articulatedly connected with their ends remote from the base element (18) to the pivoting element (20A, 20B) which is pivotable with respect to the base element (18), with one of the linkages (24, 26) being connected to a drive device and with a spring device (38) acting on at least one of the linkages (24, 26), **characterized in that** the spring device (38) is preloaded into the end positions of the pivoting element (20A, 20B) and counteracts the mass force of the latter.

2. Functional device according to Claim 1, **characterized in that** the spring device (38) is a leg spring (38) whose windings (36) are arranged concentrically with respect to a pivot axis of that linkage (26) on which said leg spring (38) acts.

3. Functional device according to Claim 2, **characterized in that** a stop (44) is provided which is rigidly connected to the base element (18) and against which is supported, in the two end positions of the pivoting element (20A, 20B), in each case one of the legs (40, 42) of the leg spring (38), with the in each case other leg (40, 42) of the leg spring (38) acting on the respective link (26).

4. Functional device according to Claim 3, **characterized in that**, in a central position of the linkage (26) on which the leg spring (38) acts, both legs (40, 42) of the leg spring (38) bear against the stop (44), and the leg spring (38) is substantially free from preload.

5. Functional device according to one of Claims 2 to 4, **characterized in that** a driver (50) for the legs (40, 42) of the leg spring (38) is formed on the linkage (26) on which the leg spring (38) acts.

6. Functional device according to Claim 5, **characterized in that** the driver (50) is a pin which is aligned parallel to the pivot axis of the respective linkage (26).

7. Functional device according to one of Claims 1 to 6, **characterized in that** said functional device is an air guiding device which is arranged in particular at the rear of the vehicle.

8. Functional device according to Claim 7, **characterized in that** the base element (18) is a spoiler body and the pivoting element (20A, 20B) is a spoiler extension.

9. Functional device according to Claim 8, **characterized in that** the spoiler extension is pivotable substantially in the vehicle transverse direction.

10. Functional device according to Claim 8 or 9, **characterized in that** the spoiler body (18) is provided with a drive device for deploying the air guiding device.

11. Functional device according to one of Claims 8 to 10, **characterized in that** the spoiler extension (20A, 20B) is pivoted inwards with respect to a vehicle longitudinal central plane in one end position, and is pivoted outwards with respect to the vehicle longitudinal central plane in the other end position.

12. Functional device according to one of Claims 8 to 11, **characterized in that** the spoiler extension (20A, 20B) is articulatedly connected to the upper side of the spoiler body (18).

13. Functional device according to Claim 11, **characterized in that** the spring device (38) acts on the outer linkage (24) with respect to the vehicle longitudinal central plane.

14. Functional device according to one of Claims 1 to 13, **characterized in that** the multi-linkage mechanism has linkage axes which intersect at a point.

## Revendications

1. Dispositif fonctionnel, qui peut être disposé sur un côté extérieur d'une carrosserie de véhicule, comprenant un élément de base (18) et au moins un élément pivotant (20A, 20B), qui peut pivoter entre deux positions extrêmes par rapport à l'élément de base (18), dans lequel un mécanisme à articulations multiples est articulé sur l'élément de base (18) et comprend au moins deux bielles (24, 26), qui sont articulées par leurs extrémités situées à l'opposé de l'élément de base (18) sur l'élément pivotant (20A, 20B) capable de pivoter par rapport à l'élément de base (18), dans lequel une des bielles (24, 26) est reliée à un dispositif d'entraînement et un dispositif à ressort (38) agit sur au moins une des bielles (24, 26), **caractérisé en ce que** le dispositif à ressort (38) est précontraint dans les positions extrêmes de l'élément pivotant (20A, 20B) et s'oppose à la force massique de celui-ci.

2. Dispositif fonctionnel selon la revendication 1, **caractérisé en ce que** le dispositif à ressort (38) est un ressort à branches, dont les spires (36) sont disposées de façon concentrique à un axe de pivotement de la bielle (26) sur laquelle il agit.

3. Dispositif fonctionnel selon la revendication 2, **caractérisé en ce qu'**il est prévu une butée (44), qui est assemblée de façon rigide à l'élément de base (18) et sur laquelle s'appuie respectivement une des branches (40, 42) du ressort à branches (38) dans les deux positions extrêmes de l'élément pivotant (20A, 20B), dans lequel l'autre branche respective (40, 42) du ressort à branches (38) agit sur la bielle concernée (26).

4. Dispositif fonctionnel selon la revendication 3, **caractérisé en ce que**, dans une position moyenne de la bielle (26) sur laquelle le ressort à branches (38) agit, les deux branches (40, 42) du ressort à branches (38) sont appliquées sur la butée (44) et le ressort à branches (38) est essentiellement libre de précontrainte.

5. Dispositif fonctionnel selon l'une quelconque des revendications 2 à 4, **caractérisé en ce qu'**un entraîneur (50) pour les branches (40, 42) du ressort à branches (38) est formé sur la bielle (26) sur laquelle le ressort à branches (38) agit.

6. Dispositif fonctionnel selon la revendication 5, **caractérisé en ce que** l'entraîneur (50) est une tige, qui est orientée parallèlement à l'axe de pivotement de la bielle concernée (26).

7. Dispositif fonctionnel selon l'une quelconque des revendications 1 à 6, **caractérisé en ce qu'**il est constitué par un dispositif déflecteur d'air, qui est disposé en particulier à l'arrière du véhicule.

8. Dispositif fonctionnel selon la revendication 7, **caractérisé en ce que** l'élément de base (18) est un corps de spoiler et l'élément pivotant (20A, 20B) est une extension de spoiler.

9. Dispositif fonctionnel selon la revendication 8, **caractérisé en ce que** l'extension de spoiler peut pivoter essentiellement dans la direction transversale du véhicule.

10. Dispositif fonctionnel selon la revendication 8 ou 9, **caractérisé en ce que** le corps de spoiler (18) est muni d'un dispositif d'entraînement destiné à faire sortir le dispositif déflecteur d'air.

11. Dispositif fonctionnel selon l'une quelconque des revendications 8 à 10, **caractérisé en ce que** l'extension de spoiler (20A, 20B) est pivotée vers l'intérieur dans une position extrême par rapport à un plan médian longitudinal du véhicule et est pivotée vers l'extérieur dans l'autre position extrême par rapport au plan médian longitudinal du véhicule.

12. Dispositif fonctionnel selon l'une quelconque des revendications 8 à 11, **caractérisé en ce que** l'extension de spoiler (20A, 20B) est articulée sur le côté supérieur du corps de spoiler (18).

13. Dispositif fonctionnel selon la revendication 11, **caractérisé en ce que** le dispositif à ressort (38) agit sur la bielle (24) située à l'extérieur par rapport au plan médian longitudinal du véhicule.

14. Dispositif fonctionnel selon l'une quelconque des revendications 1 à 13, **caractérisé en ce que** le mécanisme à articulations multiples présente des axes de pivotement, qui se coupent en un point.
